Europäisches Patentamt

European Patent Office

Office européen des brevets

(19)

(11) Numéro de publication : **0 362 028 B1**

(12) **FASCICULE DE BREVET EUROPEEN**

(45) Date de publication du fascicule du brevet :
15.04.92 Bulletin 92/16

(51) Int. Cl.⁵ : **B60J 7/22**

(21) Numéro de dépôt : **89402583.2**

(22) Date de dépôt : **21.09.89**

(54) **Dispositif d'ouverture de toit à au moins deux volets orientables.**

(30) Priorité : **26.09.88 FR 8812546**

(43) Date de publication de la demande :
**04.04.90 Bulletin 90/14**

(45) Mention de la délivrance du brevet :
**15.04.92 Bulletin 92/16**

(84) Etats contractants désignés :
**DE GB IT NL**

(56) Documents cités :
**EP-A- 0 218 020**
**GB-A- 2 113 623**
**GB-A- 2 147 943**

(73) Titulaire : **FRANCE DESIGN Henri Heuliez S.A.**
**"La Boujalière", Le Pin**
**F-79140 Cerizay (FR)**

(72) Inventeur : **Queveau, Gérard**
**"Amik Farm Les Boulaies" Le Pin**
**F-79140 Cerizay (FR)**

(74) Mandataire : **Rodhain, Claude et al**
**Cabinet Claude Rodhain 30, rue la Boétie**
**F-75008 Paris (FR)**

EP 0 362 028 B1

## Description

Le domaine de l'invention est celui des dispositifs d'ouverture de toit à plusieurs volets utilisés pour la ventilation d'habitacles de véhicules. Plus particulièrement l'invention concerne un dispositif pour ouvrir et/ou fermer un volet avant et un volet arrière montés à pivotement dans une ouverture formée dans le pavillon d'un véhicule, le dispositif comprenant un moyen d'entraînement de câbles entraînés dans des directions opposées l'un par rapport à l'autre par le moyen d'entraînement de câbles, des moyens d'articulation du volet avant et du volet arrière commandés par les câbles pour faire pivoter le volet avant ou le volet arrière dans une position d'ouverture et/ou de fermeture les moyens d'articulation comprenant une paire de chariots avant placés de chaque côté latéral du volet avant et une paire de chariots arrière placés de chaque côté latéral du volet arrière, les chariots étant mobiles en translation dans des rails de guidage disposés de part et d'autre des volets.

On connaît déjà des dispositifs d'ouverture de toit du type constitué par un panneau monté à articulation sur un de ses côtés dans le pavillon du véhicule. Ce type de dispositif permet l'ouverture du toit par l'entrebaîllement du panneau mobile vers l'extérieur du véhicule, dégageant ainsi une zone d'aération de l'habitacle du véhicule. Cependant, dans le cas d'habitacles de grand volume, une seule ouverture n'est pas toujours suffisante pour obtenir une bonne ventilation de l'ensemble de l'habitacle. On a alors recours à des toits ouvrants comportant plusieurs volets montés à articulation ou amovibles permettant de dégager des zones d'ouverture au niveau des passagers avant et des passagers arrière. Cependant, dans ce type de dispositif, le système de commande d'ouverture des différents volets doit être dupliqué autant de fois qu'il y a d'ouvertures dans le toit. Cette disposition présente l'inconvénient majeur que la commande d'ouverture des volets entrebaillants ne peut se faire depuis une commande centrale accessible par exemple par le conducteur du véhicule.

Le document GB-A-2147943 divulgue un dispositif d'ouverture de toit comprenant un volet avant orientable pour faire déflecteur de vent et un volet arrière coulissant pour aérer l'habitacle du véhicule commandés par une commande unique.

Il est prévu un mécanisme de pivotement du volet avant incluant un levier de détente et un verrou et un mécanisme de coulissement du volet arrière incluant une paire de bras liés par un axe et manoeuvrés par un jeu de trois coulisses, les mécanismes de pivotement et de coulissement étant commandés par une paire de câbles se déplaçant dans une direction opposée l'un par rapport à l'autre et engagés sur un pignon à engrenage. Selon une première manoeuvre du pignon, le volet avant est d'abord entrebaîllé puis le volet arrière est entre baîllé et coulissé au-dessus du pavillon du véhicule. Selon une seconde manoeuvre du pignon, inverse de la première manoeuvre, le volet arrière, puis le volet avant sont amenés dans leur position de fermeture. Toutefois, ce dispositif d'ouverture de toit connu ne permet pas de commander sélectivement l'ouverture d'un des deux volets puisque l'ouverture du volet arrière n'est possible que quand le volet avant est déjà ouvert. L'objectif de l'invention est de palier cet inconvénient.

En particulier, l'invention a pour objet la réalisation d'un dispositif d'ouverture de toit d'automobile comportant plusieurs volets orientables à entrebaîllement, l'ouverture et la fermeture de ces volets étant commandés par un seul moyen de manoeuvre, de sorte que le conducteur du véhicule peut réguler la ventilation de l'habitacle du véhicule en utilisant une seule commande.

Un autre objectif de l'invention est de fournir un dispositif d'ouverture de toit d'automobile dont le moyen commun de manoeuvre des différents volets orientables permet simultanément ou sélectivement de commander l'ouverture et/ou la fermeture desdits volets.

Encore un autre objectif de l'invention est de fournir un dispositif d'ouverture de toit comportant un panneau entrebaîllant et mobile en translation, commandé par les moyens de manoeuvre des volets orientables.

Ces objectifs ainsi que d'autres qui apparaîtront par la suite sont atteints à l'aide d'un dispositif conforme au préambule de la revendication 1, remarquable en ce que

– chaque chariot portant un organe de manoeuvre est destiné à se déplacer dans une came formé sur le côté latéral du volet en face duquel est placé ledit chariot, de manière à appliquer au volet un mouvement de pivotement autour d'un axe lors du déplacement de l'organe de manoeuvre dans la came;

– chaque câble est relié par ses deux extrémités d'une part à un chariot avant et d'autre part au chariot arrière diamétralement opposé audit chariot avant de sorte que les chariots diamétralement opposés se déplacent en translation dans un sens opposé lorsque les câbles sont entraînés;

– les cames des volets avant et arrière ont un profil en forme d' onde comprenant des crêtes et des creux agencés de manière que le déplacement des organes de manoeuvre, longeant les profils de cames, commande simultanément ou sélectivement l'ouverture et/ou la fermeture des volets avant et arrière.

Des modes préférentiels de réalisation de l'invention sont indiqués dans les revendications dépendantes 2 à 10.

D'autres caractéristiques et avantages de l'invention apparaîtront à la lecture de la description suivante d'un mode de réalisation préférentielle de l'invention donnée à titre illustratif et des dessins annexés dans lesquels :

– la figure 1 est une vue schématique du dispositif d'ouverture de toit monté sur le pavillon d'un véhicule,

– la figure 2 est un schéma de principe du dispositif d'ouverture de toit selon l'invention,

– la figure 3 est une vue en coupe d'une partie du dispositif d'ouverture de toit,

– les figures 4a à 4e représentent de façon schématique les différentes positions des volets orientables et des panneaux.

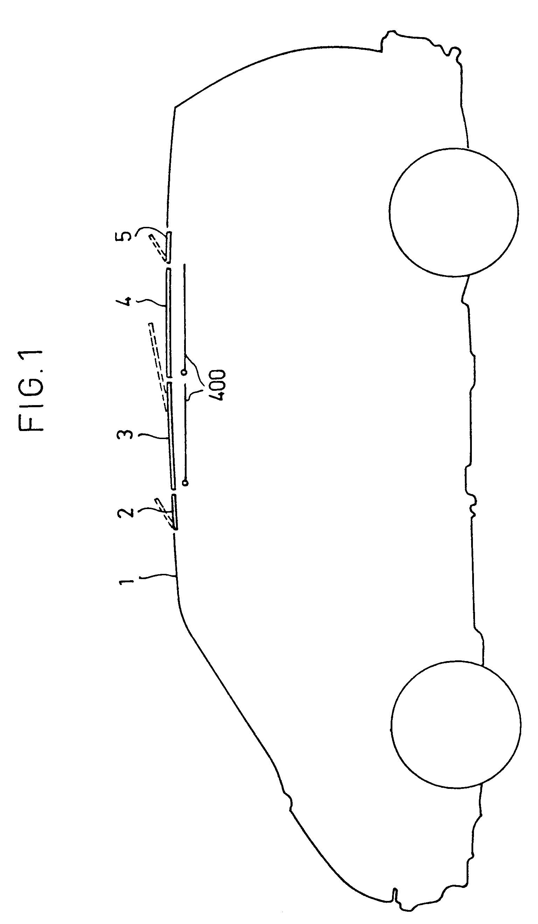

Le dispositif d'ouverture de toit selon l'invention comporte quatre panneaux disposés en alignement sur le pavillon 1 du véhicule comme visible en figure 1. Un premier petit panneau avant ou volet orientable 2 monté à articulation et pouvant s'entrebâiller vers l'extérieur de l'habitacle du véhicule, permet la ventilation de l'air au niveau des passagers avant. Un grand panneau 3 est disposé à l'arrière du volet 2, ce panneau 3 pouvant s'entrebâiller pour ventiler le milieu avant de l'habitacle et coulisser par dessus le pavillon 1, libérant ainsi une ouverture sur le milieu avant de l'habitacle. Lorsque le panneau 3 est coulissé par dessus le pavillon 1, le volet mobile 2 joue le rôle de déflecteur, orientant ainsi les filets d'air de telle manière qu'ils ne pénètrent pas dans l'habitacle provoquant par là, bruit et turbulence. Un troisième panneau 4 peut être disposé à l'arrière du panneau 3. Ce panneau 4 peut être fixe ou démontable pour libérer une ouverture sur le milieu arrière du pavillon 1. Un quatrième petit panneau ou volet orientable 5 est disposé à l'arrière du panneau 4 et peut s'entrebâiller vers l'extérieur de l'habitacle. Les différents panneaux 3, 4, et volets orientables 2, 5, peuvent être en verre, en tôle, en matière synthétique ou tout autre matière.

De façon préférentielle, au moins un des panneaux 3, 4, peut comporter un rideau occultateur 400 se déployant sur toute ou partie de la surface dudit panneau dans le cas de panneaux transparents.

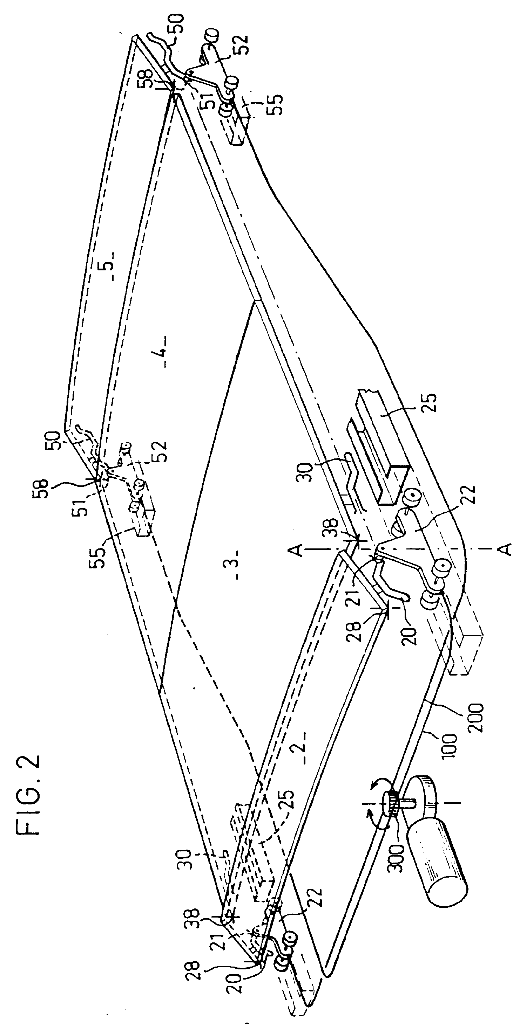

Chacun desdits volets orientables 2, 5, de forme sensiblement rectangulaire, coopère à chacune de leurs extrémités transversales respectives avec une came 20, 50, pour le guidage de galets 21, 51, solidaires de chariots de commande 22, 52, comme visible en figure 2. Chaque volet orientable 2, 5, est associé à un jeu de deux cames identiques respectivement 20, 50. Les chariots de commande 22, 52 sont mobiles en translation alternative dans la direction longitudinale du pavillon, cette direction étant matérialisée par un jeu de rails 25, 55, disposés de part et d'autre des volets orientables 2, 5, dans lesquels se déplacent lesdits chariots 22, 52, les rails 25, 55, guidant respectivement les chariots 22, 52.

Les chariots de commande diagonalement opposés 22, 52, respectivement des deux volets orientables 2, 5, sont reliés deux à deux par un câble respectivement 100, 200, de sorte que lesdits chariots diagonalement opposés se déplacent simultanément en translation mais dans un sens opposé. Les câbles 100, 200, sont entraînés simultanément mais dans un sens opposé par un pignon 300 monté sur un axe, ledit pignon pouvant être entraîné en rotation par une manivelle ou un moteur électrique.

Chacun desdits volets 2, 5, est monté à articulation sur un des axes respectivement 28, 58, placés sensiblement perpendiculaires à l'axe longitudinal du pavillon et à l'avant de chacun desdits volets orientables, de sorte que ceux-ci peuvent s'entrebâiller par rotation autour desdits axes respectifs.

Lesdites cames 20, 50, respectivement desdits volets orientables 2, 5, présentent une forme d'onde, trapézoïdale, de sorte que le déplacement en translation des chariots 22, 52, par actionnement des câbles 100, 200, entraîne un mouvement d'articulation desdits volets orientables 2, 5, dû au déplacement des galets 21, 51, dans les cames 20, 50. Grâce à la forme particulière des cames 20, 50, les volets orientables 2, 5, peuvent sélectivement ou simultanément être entrebâillés ou fermés.

Comme visible en figure 2, le panneau mobile 3 coopère avec un jeu de deux cames 30, disposées à ses extrémités transversales pour le guidage des galets 21 solidaires des chariots 25. Le panneau 3 est monté à articulation sur un axe 38 placé sensiblement perpendiculaire à l'axe longitudinal du pavillon 1 et à l'avant dudit panneau 3. L'axe 38 peut se déplacer en translation suivant une direction parallèle à l'axe longitudinal du pavillon dans le sens avant du pavillon vers l'arrière du pavillon.

Les panneaux 3, 4, et les volets orientables 2, 5, sont maintenus rigides dans le pavillon 1 grâce à un cadre 60 de forme sensiblement rectangulaire, en matière synthétique moulée ou en aluminium moulé.

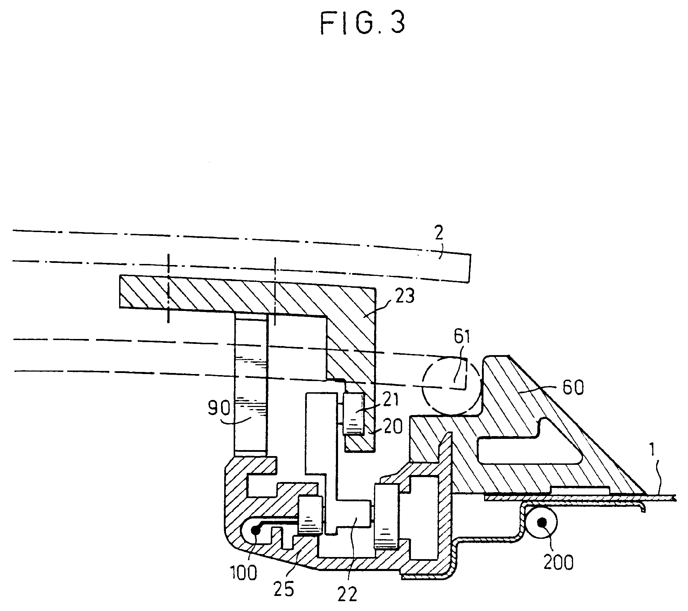

Le cadre comporte un profil cintré soudé bord à bord, collé ou assemblé par tout autre moyen. Le toit ouvrant à plusieurs panneaux peut être monté dans le cas d'une solution première monte ou seconde monte dans le pavillon du véhicule. La fixation avec le pavillon est réalisée grâce à un contre-cadre 62 assemblé au cadre 60. Des joints d'étanchéité 61 sont disposés autour de chacun des panneaux 3, 4, et volets orientables 2, 5, de sorte à éviter les écoulements d'eau l'intérieur de l'habitacle, en position de fermeture des volets et des panneaux comme visible en figure 3. D'une façon générale, et plus particulièrement pour le volet orientable 2, celui-ci est assemblé à une coulisse 23 montée à articulation autour de l'axe 28. Chaque volet orientable 2, 5, et le panneau 3 possède un jeu de coulisses spécifiques dans lesquelles sont disposées respectivement les cames 20, 30, 50. Pour les deux volets orientables 2, 5, un ressort à lame 90 de maintien en position d'ouverture dudit volet est placé entre le rail 25 et la coulisse 23 de sorte que, en position entrebâillée du volet 2, celui-ci est maintenu dans cette position par action du ressort à lame 90 travaillant en compression.

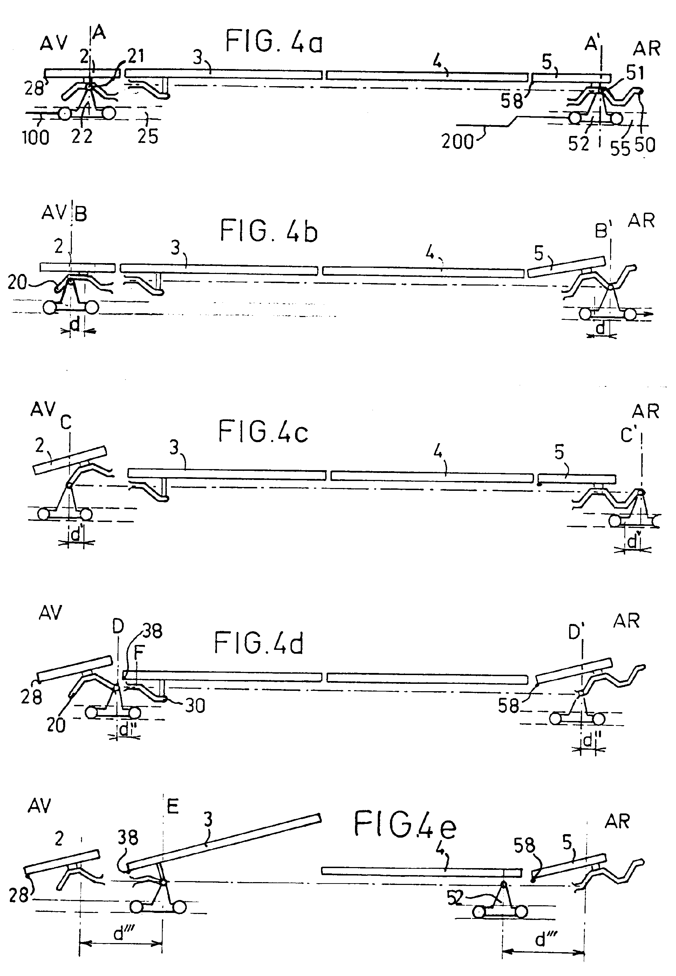

Le dispositif d'ouverture de toit étant symétrique par rapport à l'axe longitudinal du pavillon, nous allons maintenant décrire son fonctionnement en ne considérant que l'action des éléments situés sur une de ses faces latérales, plus précisément la face latérale gauche comme montré dans les figures 4a à 4e.

La came 20 associée au volet orientable 2 présentant la forme d'une onde comportant une crête et un creux. En position de fermeture des deux volets orientables 2, 5, les galets 21, 51, coopérant avec les cames 20, 50, associées aux deux volets 2, 5, sont positionnés respectivement en A et A', correspondant aux crêtes des cames 20 , 50, comme visible en figure 4a. Lorsque le chariot 22 est déplacé en translation vers l'avant du pavillon au moyen du câble 100 sur une distance d, le chariot 52 est déplacé en translation vers l'arrière du pavillon sous l'action du câble 200, sur une distance d, les câbles 100, 200, agissant de manière opposée par le biais du pignon 300. Dans cette position des chariots 22, 52, les galets 21, 51, sont positionnés respectivement sur une crête B de la came 20 et dans un creux B' de la came 50. Le positionnement du galet 51 dans le creux B' de la came 50 a pour effet de faire lever le volet 5 par rotation de celui-ci autour de son axe 58, tandis que le volet 2 reste en position de fermeture comme visible en figure 4b.

Si le chariot 22 est de nouveau déplacé en translation vers l'avant du pavillon sur une distance d', le galet 21 se positionne dans un creux C de la came 20, entrebâillant ainsi le volet 2, tandis que de façon symétrique, le galet 51 est déplacé en translation vers l'arrière du pavillon sur un distance d', se positionnant ainsi dans un creux C' de la came 50 et fermant le volet 5 comme visible en figure 4c.

Par conséquent, par rotation du pignon 300 dans le sens des aiguilles d'une montre, entraînant ainsi les câbles 100, 200 en translation dans un sens opposé, on obtient sélectivement l'entrebâillement du volet 5, puis l'entrebâillement du volet 2. La fermeture des deux volets 2, 5 s'obtient en revenant en position initiale par rotation du pignon 300 dans le sens inverse des aiguilles d'une montre, cette position correspondant à la position des volets illustrée en figure 4a.

De façon avantageuse, un panneau 3 entrebâillant et mobile en translation est disposé en arrière du volet 2. Le panneau 3 coopère avec un jeu de cames 30 en forme de demi-onde et présentant une crête F et un creux E. A partir de la position initiale, le pignon 300 est entraîné en rotation dans le sens inverse des aiguilles d'une montre. Sous cette action, le chariot 22 est déplacé en translation vers l'arrière du pavillon sur une distance d'', tandis que le chariot 52 est déplacé en translation vers l'avant du pavillon sur la même distance d''.

Dans cette position, le galet 21 se positionne dans un creux D de la came 20 entrebâillant ainsi le volet 2, et le galet 51 se positionne de façon similaire dans un creux D' de la came 50, entrebâillant aussi le volet 5 comme visible en figure 4d.

Les cames 20, 50, présentent chacune une extrémité débouchante respective D, D', correspondant à un creux, de sorte que les galets 21, 51, peuvent quitter la came dans laquelle ils coulissent lorsqu'ils atteignent précisément cette extrémité débouchante. De même la came 30 présente aussi une extrémité débouchante correspondant à une crête F, de sorte que le galet 21 peut s'engager dans la came 30 lorsqu'il se présente au droit de cette extrémité débouchante.

Par conséquent, lorsque le chariot 22 est déplacé en translation vers l'arrière du pavillon sur une distance d''', le galet 21 quitte la came 20 et s'engage dans la came 30 à l'endroit de la crête F de la came 30. Le volet 2 est maintenu en position entrebâillée sous l'action du ressort à lame 90. De façon symétrique, le galet 51 quitte la came 50 laissant le volet 5 entrebâillé sous l'action d'un autre ressort à lame 90. Le galet 21 se déplaçant de façon continue vers l'arrière du pavillon, se positionne ensuite dans un creux E de la came 30 coopérant avec le panneau 3, de sorte que celui-ci s'entrebâille vers l'extérieur de l'habitacle par rotation autour de son axe 38. Arrivant en fin de course de la came 30, le galet 21 entraîne le panneau 3 en translation vers l'arrière du pavillon comme visible en figure 4e.

La rotation du pignon 300 dans le sens inverse des aiguilles d'une montre permet d'obtenir simultanément l'entrebâillement de deux volets orientables 2, 5, puis l'entrebâillement et le déplacement en translation du panneau 3.

## Revendications

1. Un dispositif pour ouvrir et/ou fermer un volet avant (2) et un volet arrière (5) montés à pivotement dans une ouverture formée dans le pavillon (1) d'un véhicule, le dispositif comprenant un moyen d'entraînement de câbles (300), une paire de câbles (100,200) entraînés dans des directions opposées l'un par rapport à l'autre par le moyen d'entraînement de câbles, des moyens d'articulation du volet avant et du volet arrière commandés par les câbles pour faire pivoter le volet avant ou le volet arrière dans une position d'ouverture et/ou de fermeture, les moyens d'articulation comprenant une paire de chariots avant (22) placés de chaque côté latéral du volet avant et une paire de chariots arrière (52) placés de chaque côté latéral du volet arrière, les chariots étant mobiles en translation dans des rails de guidage (25,55) disposés de part et d'autre des volets caractérisé en ce que

– chaque chariot portant un organe de manoeuvre (21,51) est destiné à se déplacer dans une came (20,50) formé sur le côté latéral du volet en face duquel est placé ledit chariot, de manière à appliquer au volet un mouvement de pivotement autour d'un axe (28,58) lors du déplacement de l'organe de manoeuvre dans la came;

– chaque câble est relié par ses deux extrémités d'une part à un chariot avant et d'autre part au chariot arrière diamétralement opposé audit chariot avant de sorte que les chariots diamétralement opposés se déplacent en translation dans un sens opposé lorsque les câbles sont entraînés;

– les cames (20,50) des volets avant et arrières ont un profil en forme d'onde comprenant des crêtes et des creux agencés de manière que le déplacement des organes de manoeuvre, longeant les profils de cames, commande simultanément ou sélectivement l'ouverture et/ou la fermeture des volets avant et arrière.

2. Le dispositif selon la revendication 1, dans lequel le profil d'une came (20) du volet avant (2) à la forme d'une onde trapézoïdale comportant une crête et deux creux et dans lequel le profil d'une came (50) du volet arrière (5) à la forme d'une onde trapézoïdale comportant deux crêtes et deux creux.

3. Le dispositif selon la revendication 1, comportant en outre un panneau orientable (3) et mobile en translation par rapport au pavillon, ledit panneau étant disposé entre le volet avant et le volet arrière dans l'ouverture formée dans le pavillon, et ledit panneau ayant des côtés latéraux sur lesquels sont formées des cames (30) ayant un profil en forme d'onde, les cames du volet avant et dudit panneau ayant des extrémités débouchantes en vis-à-vis l'une par rapport à l'autre de manière que les organes de manoeuvre des chariots avant passent des cames du volet avant aux cames du panneau orientable sous l'action du moyen de manoeuvre de câbles.

4. Le dispositif selon la revendication 3, dans lequel une came (30) du panneau orientable (3) à la forme d'une onde trapézoïdale comportant une crête et un creux.

5. Le dispositif selon la revendication 3, dans lequel les cames du volet arrière ont une extrémité débouchante.

6. Le dispositif selon les revendications 2 à 5, dans lequel les extrémités débouchantes des cames (20, 50) des volets avant et arrière correspondent à un creux d'onde et l'extrémité débouchante d'une came (30) du panneau orientable correspond à une crête d'onde.

7. Le dispositif selon la revendication 5, dans lequel les moyens d'articulation comportent des moyens élastiques (90) de maintien en entrebaillement des volets avant et arrière lorsque les organes de manoeuvre des chariots avant et arrière quittent les cames des volets avant et arrière.

8. Le dispositif selon la revendication 7, dans lequel les moyens élastiques de maintien en entrebaillement sont constitués de ressorts à lames.

9. Le dispositif selon la revendication 3 comprenant en outre un panneau amovible (4) placé entre le panneau central (3) et le volet arrière (5).

10. Le dispositif selon la revendication 1, dans lequel le moyen d'entrainement de câbles est un pignon à engrenage (300) de part et d'autre duquel sont engagés les deux câbles, le pignon étant entraîné en rotation par un moteur électrique ou une manivelle.

**Patentansprüche**

1. Vorrichtung zum Öffnen und/oder Schließen einer vorderen Klappe (2) und einer hinteren Klappe (5), die in einer Öffnung im Karosserieoberteil (1) eines Kraftfahrzeuges kippbar angebracht sind, bestehend aus einem Seilantriebsmittel (300), zwei Seilen (100, 200), die durch das Seilantriebsmittel in zueinander entgegengesetzten Richtungen mitgeführt werden, durch die Seile betätigten Gelenkmitteln der vorderen Klappe und der hinteren Klappe zum Kippen der vorderen Klappe oder der hinteren Klappe in eine Offen- und/oder Schließstellung, wobei die Gelenkmittel zwei vordere Wagen (22) umfassen, die auf beiden Seiten der vorderen Klappe angeordnet sind, und zwei hintere Wagen (52), die auf beiden Seiten der hinteren Klappe angeordnet sind, wobei die Wagen in beiderseits der Klappen angeordneten Führungsschienen (25, 55) verschiebbar sind, **dadurch gekennzeichnet, daß**

– jeder ein Betätigunggsorgan (21, 51) tragende Wagen dazu bestimmt ist, sich in einem Nocken (20, 50) zu bewegen, der an der Seite der Klappe, der gegenüber der gennante Wagen angeordnet , ausgebildet , derart, daß der Klappe bei Bewegung des Betätigungsorgans im Nocken eine Kippbewegung um eine Achse (28, 58) mitgeteilt wird;

– jedes Seil an seinen Enden einerseits mit einem vorderen Wagen und andererseits mit dem dem genannten vorderen Wagen diametral gegenüber befindlichen, hinteren Wagen verbunden ist, derart, daß sich die diametral gegenüber befindlichen Wagen in entgegengesetzter Richtung verschieben, wenn die Seile in Bewegung gesetzt werden;

– die Nocken (20, 50) der vorderen und hinteren Klappe ein wellenförmiges Profil aufweisen, das derart angeordnete Berge und Täler enthält, daß die Bewegung der Betätigungsorgane den Nockenprofilen entlang gleichzeitig oder wahlweise das Öffnen und/oder das Schließen der vorderen und hinteren Klappe bewirkt.

2. Vorrichtun gemäß Patentanspruch 1, bei der das Profil des Nockens (20) der vorderen Klappe (2) die Form einer trapezoiden Welle hat, die einen Berg und zwei Täler aufweist, und bei der das Profil des Nockens (50) der hinteren Klappe (5) die Form einer trapezoiden Welle hat, die zwei Berge und zwei Täler aufweist.

3. Vorrichtung gemäß Patentanspruch 1, darüber hinaus eine orientierbare und relativ zum Karosserieoberteil verschiebbare Platte (3) aufweisend, die zwischen der vorderen Klappe und der hinteren Klappe der Öffnung im Karosserieoberteil angeordnet ist, und die Seiten aufweist, an denen Nocken (30) ausgebildet sind, die ein wellenförmiges Profil aufweisen, wobei die Nocken der vorderen Klappe und der genannten Platte Enden aufweisen, die einander gegenüber auslaufen, so daß die Betätigungsorgane der vorderen Wagen unter der Einwirkung des Betätigungsmittels der Seile von den Nocken der vorderen Klappe zu den Nocken der orientierbaren Platte hinüberwechseln.

4. Vorrichtung gemäß Patentanspruch 3, bei der Nocken (30) der orientierbaren Platte (3) die Form einer trapezoiden Welle mit einem Berg und einem Tal hat.

5. Vorrichtung gemäß Patentanspruch 3, bei der die Nocken der hinteren Klappe ein auslaufendes Ende aufweisen.

6. Vorrichtung gemäß Patentanpruch 2 bis 5, bei der die auslaufenden Enden der Nocken (20, 50) der vorderen und hinteren Klappe einem Wellental und das auslaufende Ende des Nockens (30) der orientierbaren Platte einem Wellenberg entsprechen.

7. Vorrichtung gemäß Patentanspruch 5, bei der die Gelenkmittel elastische Mittel (90) zum Halten der vorderen und hinteren Klappe in Kippstellung aufweisen, wenn die Betätigungsorgane der vorderen und hinteren Wagen die Nocken der vorderen und hinteren Klappe verlassen.

8. Vorrichtung gemäß Patentanspruch 7, bei der die elastischen Mittel zum Halten in Kippstellung aus Blattfedern bestehen.

9. Vorrichtung gemäß Patentanspruch 3, darüber hinaus eine entfernbare Platte (4) zwischen der mittleren Platte (3) und der hinteren Klappe (5) enthaltend.

10. Vorrichtung gemäß Patentänspruch 1, bei der das Seilantriebsmittel ein Getrieberitzel (300) ist, auf dessen Seiten die beiden Seile eingeklemmt sind, wobei das Ritzel durch einen Elektromotor oder eine Kurbel in Drehung versetzt wird.

**Claims**

1. A device for opening and/or closing a front shutter (2) and a rear shutter (5) mounted in pivoting manner in an opening formed in a vehicle roof (1), the device comprising a cable driving means (300), a pair of cables (100, 200) driven in opposite directions to one another by the cable driving means, means for articulating the front shutter and the rear shutter controlled by the cables in order to pivot the front shutter or the rear shutter into an open and/or closed position, the articulation means comprising a pair of front runners (22) placed on each lateral side of the front shutter and a pair of rear runners (52) placed on each lateral side of the rear shutter, the runners being mobile in translation in guide rails (25,55) arranged on either side of the shutters, characterized in that:

– each runner carries an operating member (21,51) moving in a cam (20,50) formed on the lateral side of the shutter in front of which is placed the said runner, so as to apply to the said shutter a pivoting movement about an axis (28,58) during the displacement of the operating member in the cam;

– each cable is connected by its two ends on the one hand to a front runner and on the other to the rear runner diametrically opposite to said front runner, so that the diametrically opposite runners move in translation in an opposite direction when the cables are driven;

– the cams (20,50) of the front and rear shutters have a wave-shaped profile having peaks and valleys arranged in such a way that the displacement of the operating members, passing along the profiles of the cams, simultaneously or selectively controls the opening and/or closing of the front and rear shutters.

2. Device according to claim 1, wherein the profile of a cam (20) of the front shutter (2) has the shape of a trapezoidal wave having a peak and two valleys and wherein the profile of a cam (50) of the rear shutter (5) has the shape of a trapezoidal wave with two peaks and two valleys.

3. Device according to claim 1, also having an adjustable panel (3) mobile in translation with respect to the roof, said panel being positioned between the front shutter and the rear shutter in the opening formed in the roof, and said panel having lateral sides on which are formed cams (30) having a wave-shaped profile, the cams of the front shutter and said shutter having facing issuing or opening ends, so that the operating members of the front runners pass from the cams of the front shutter to the cams of the adjustable panel under the action of the cable operating means.

4. Device according to claim 3, wherein a cam (30) of the adjustable panel (3) is shaped like a trapezoidal wave having a peak and a valley.

5. Device according to claim 3, wherein the cams of the rear shutter have an issuing end.

6. Device according to claims 2 to 5, wherein the issuing ends of the cams (20,50) of the front and rear shutters correspond to a wave valley and the issuing end of a cam (30) of the adjustable panel corresponds to a wave peak.

7. Device according to claim 5, wherein the articulation means comprise elastic means (90) for keeping the front and rear shutters partly open when the operating members for the front and rear runners leave the cams of the front and rear shutters.

8. Device according to claim 7, wherein the elastic means for maintaining a partly open state are constituted by plate springs.

9. Device according to claim 3 also comprising a removable panel (4) placed between the central panel (3) and the rear shutter (5).

10. Device according to claim 1, wherein the cable drive means is a pinion (300) on either side of which are engaged the two cables, said pinion being rotated by an electric motor or a crank.

# FIG.1

1 2 3 4 5

400

EP 0 362 028 B1

FIG. 2

FIG. 3

FIG. 4a

FIG. 4b

FIG.4c

FIG.4d

FIG 4e